(19) **Europäisches Patentamt**
**European Patent Office**
**Office européen des brevets**

(11) **EP 4 166 231 B1**

(12) **EUROPEAN PATENT SPECIFICATION**

(45) Date of publication and mention
of the grant of the patent:
**29.10.2025 Bulletin 2025/44**

(21) Application number: **21821221.5**

(22) Date of filing: **21.05.2021**

(51) International Patent Classification (IPC):
**B01D 53/94** $^{(2006.01)}$    **B01J 23/63** $^{(2006.01)}$
**F01N 3/28** $^{(2006.01)}$

(52) Cooperative Patent Classification (CPC):
**F01N 3/281; B01J 23/002; B01J 23/63;**
**B01J 35/57; B01J 37/0215; B01J 37/08;**
**F01N 3/2821;** B01D 53/9454; B01D 2258/01;
F01N 2330/02; F01N 2470/06; F01N 2510/06;
Y02A 50/20

(86) International application number:
**PCT/JP2021/019391**

(87) International publication number:
**WO 2021/251105 (16.12.2021 Gazette 2021/50)**

(54) **CATALYST CARRYING SUBSTRATE AND CATALYTIC CONVERTER**

KATALYSATORTRÄGERSUBSTRAT UND KATALYSATOR

SUBSTRAT SUPPORT DE CATALYSEUR ET CONVERTISSEUR CATALYTIQUE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **12.06.2020 JP 2020102008**

(43) Date of publication of application:
**19.04.2023 Bulletin 2023/16**

(73) Proprietor: **NIPPON STEEL Chemical & Material**
**Co., Ltd.**
**Tokyo 103-0027 (JP)**

(72) Inventors:
• **KONYA, Shogo**
**Tokyo 103-0027 (JP)**
• **MIYAMOTO, Kazuki**
**Tokyo 103-0027 (JP)**
• **GOTO, Yasuhide**
**Tokyo 103-0027 (JP)**
• **INAGUMA, Toru**
**Tokyo 103-0027 (JP)**
• **MURAMATSU, Kei**
**Tokyo 103-0027 (JP)**
• **OMIZU, Masafumi**
**Tokyo 103-0027 (JP)**
• **SHINODA, Takeshi**
**Tokyo 103-0027 (JP)**
• **NOZAWA, Souhei**
**Tokyo 103-0027 (JP)**

(74) Representative: **J A Kemp LLP**
**80 Turnmill Street**
**London EC1M 5QU (GB)**

(56) References cited:
JP-A- 2005 296 820    JP-A- 2011 156 505
JP-A- 2011 156 505    JP-B2- 4 226 884
JP-U- H0 322 521    US-A- 5 567 395

## Description

Technical Field

The present invention relates to a catalyst carrying substrate and a catalytic converter, and particularly to a catalyst converter to purify exhaust gas from an internal combustion engine of an automobile or the like, and a catalyst carrying substrate used for the same.

Background Art

As a catalyst carrier for purifying exhaust gas from an internal combustion engine of an automobile or the like, a catalytic converter constructed by fitting a honeycomb body made of a heat-resistant alloy into an outer mantle made of the same alloy has been widely used. Especially as a metal substrate made of metallic foils in a catalytic converter, a honeycomb body obtained by alternately laminating metallic flat foils each having a thickness of about 50 $\mu$m and corrugated foils formed by corrugating the metallic flat foils, or a honeycomb body obtained by winding a strip flat foil and a corrugated foil helicoidally while overlapping each other, or the like is used.

Recently, regulations on automobile emissions have tended to become very strict, and emissions of harmful substances such as carbon monoxide, hydrocarbons, and nitrogen oxides, especially at the time of a cold start in an emission measurement mode account for a significant proportion of the total emissions. For this reason, there has been a need for a technology to reduce the heat capacity of a catalyst carrying substrate because of a need for quickly activating a catalyst to suppress emissions of harmful substances at the time of a cold start.

In order to solve the above technical problem, it is effective to perforate flat foils and corrugated foils included in a metal substrate so as to reduce the heat capacity of the metal substrate. Specific methods thereof are disclosed, for example, in Patent Literature 1, Patent Literature 2, Patent Literature 3, Patent Literature 4, Patent Literature 5, Patent Literature 6, and others.

JP 4,226,884 discloses a catalyst carrying substrate in accordance with the pre-characterising section of claim 1.

Citation List

Patent Literature

Patent Literature 1
Japanese Patent No. 5199291
Patent Literature 2
Japanese Patent No. 4975969
Patent Literature 3

Japanese Patent No. 3932798
Patent Literature 4
Japanese Patent No. 4226884
Patent Literature 5
Japanese Patent No. 5279284
Patent Literature 6
Japanese Patent No. 6505336

Summary of Invention

Technical Problem

Since the metal substrate formed of perforated metallic foils has a small heat capacity, the catalyst is quickly activated to reduce emissions of harmful substances at the time of a cold start. Furthermore, turbulent flows are generated in a hole area. The turbulent flows are significantly effective in promotion of a mass transfer of the gas, and the generation of turbulent flows also contributes to improvement in purification performance.

However, a problem is that especially when the flow rate of the exhaust gas is high, the pressure loss becomes higher due to influence of the turbulent flows, resulting in decrease in output of the internal combustion engine and deterioration of fuel efficiency. An object of the present invention is to provide a catalyst carrying substrate that does not impair purification performance at the time of a cold start while suppressing increase in pressure loss, and a catalytic converter using the same.

Solution to Problem

In order to solve the above problem, a catalyst carrying substrate according to the features of claim 1 is disclosed.

Advantageous Effects of Invention

According to the present invention, it is possible to achieve both suppression of increase in pressure loss and improvement in purification performance at the time of a cold start.

Brief Description of Drawings

[Figure 1] Figure 1 is a perspective view showing an overall configuration of a catalyst carrier according to the present embodiment.
[Figure 2] Figure 2 is a partial perspective view showing a configuration including a honeycomb body and an outer mantle according to the present embodiment.
[Figure 3a] Figure 3a is a plan view showing definitions of a hole arrangement in a foil and arrangement intervals between the holes, and a definition of an aperture ratio.

[Figure 3b] Figure 3b is a plan view showing a modification of the holes (oval).

[Figure 3c] Figure 3c is a plan view showing a modification of the holes (triangular).

[Figure 4] Figure 4 is a plan view showing a hole arrangement in a foil according to a comparative example.

[Figure 5] Figure 5 is a plan view showing a hole arrangement in the foil according to an embodiment example.

[Figure 6] Figure 6 is a plan view showing a hole arrangement in the foil according to an embodiment example.

[Figure 7] Figure 7 is a plan view showing a hole arrangement in the foil according to an embodiment example.

[Figure 8] Figure 8 is a plan view showing a hole arrangement in the foil according to a comparative example.

[Figure 9] Figure 9 is a plan view showing a hole arrangement in the foil according to an embodiment example.

[Figure 10] Figure 10 is a plan view showing a hole arrangement in the foil according to an embodiment example.

[Figure 11] Figure 11 shows a relationship between pressure loss and purification performance when a foil with a thickness of 50 $\mu$m and a substrate with 300 cells per square inch are used.

[Figure 12] Figure 12 shows a relationship between pressure loss and purification performance when a foil with a thickness of 30 $\mu$m and a substrate with 400 cells per square inch are used.

[Figure 13] Figure 13 is a plan view showing a hole arrangement in the foil according to the present embodiment.

[Figure 14] Figure 14 is a plan view showing a hole arrangement in the foil according to the present embodiment.

Description of Embodiments

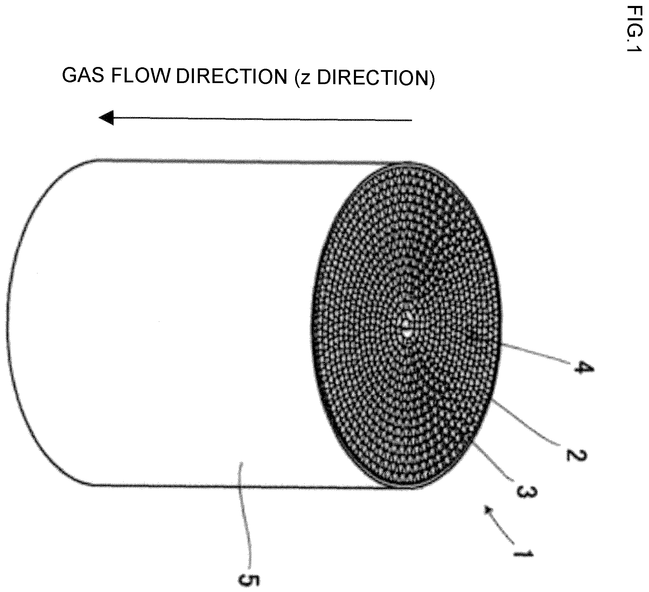

Preferred embodiments of the present invention will be described in detail with reference to the drawings, hereinafter. Figure 1 is a perspective view of a catalytic converter 1. The catalytic converter 1 includes a catalyst carrying substrate that includes: a honeycomb body 4 formed by winding a flat foil 2 and a corrugated foil 3; and an outer mantle 5 surrounding an outer peripheral surface of the honeycomb body 4, and a catalyst is supported on this honeycomb body 4. A metallic foil made of a heat-resistant alloy can be used for the flat foil 2 and the corrugated foil 3. The thickness of the metallic foil is preferably between 20 $\mu$m and 100 $\mu$m. The corrugated foil 3 can be manufactured by corrugating a metallic flat foil (base material flat foil), for example.

Here, examples of the most suitable heat-resistant alloy include Fe-20Cr-5Al series stainless steels and those joined with Ni-based brazing materials having a high heat resistance. However, the heat-resistant alloy is not limited to the Fe-20Cr-5Al series stainless steels, and various heat-resistant stainless steels containing Al in the alloy compositions may be used. The metallic foil used for a metal substrate usually contains 15 to 25 mass% Cr and 2 to 8 mass% Al. For example, Fe-18Cr-3Al alloys and Fe-20Cr-8Al alloys may also be used as the heat-resistant alloys.

The catalyst can be supported on the metallic foil by, for example, coating a surface of the metallic foil of the honeycomb body 4 with a predetermined wash coat slurry, drying, and baking this. As the wash coat slurry, for example, a slurry obtained by stirring $\gamma$-alumina powder, lanthanum oxide, zirconium oxide, and cerium oxide in an aqueous solution of palladium nitrate may be used.

Stainless steels may be used for the outer mantle 5, for example. The thickness of the outer mantle 5 is preferably 1 to 2 mm. The cell density of the honeycomb body 4 is preferably 100 to 600 cells per square inch.

The catalytic converter 1 is attached to a not-shown exhaust pipe of a vehicle such that exhaust gas flows from one end side to the other end side in the axial direction (z direction described later). The catalyst supported on the honeycomb body 4 reacts with the exhaust gas and thereby the catalytic converter 1 purifies the exhaust gas having flowed in.

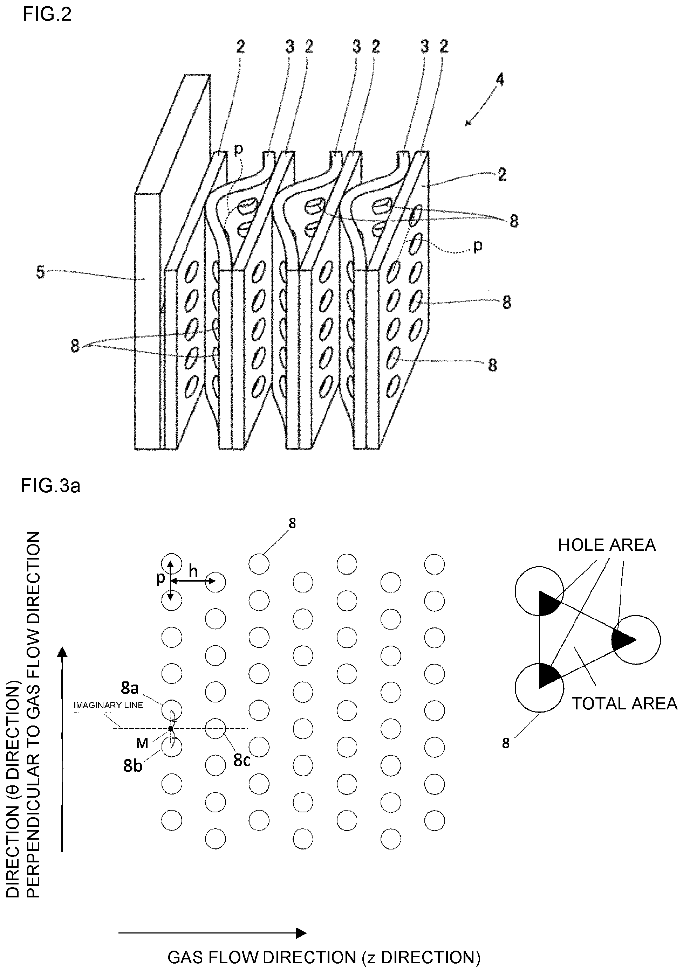

Figure 2 is a partial perspective view of the catalytic converter 1. With reference to this drawing, the flat foil 2 and the corrugated foil 3 are each provided with a plurality of holes 8 penetrating therethrough in the thickness direction. The object of the present invention is to achieve both a high purification performance and a low pressure loss; therefore, the arrangement of these holes is strictly defined.

Figure 3a is an exploded view of a part of the flat foil 2. With reference to this drawing, the holes 8 may be arranged in a staggered grid pattern, for example. The "staggered grid" means that an imaginary line extends through an intermediate position M between a hole 8a and a hole 8b, which are adjacent in a $\theta$ direction, in the z direction, and a hole 8c in a subsequent row is arranged on this imaginary line; and this arrangement relation continues in a $\theta$ direction. It is desirable to form the holes 8 in a region excluding both a predetermined range including a gas inlet end and a predetermined range including a gas outlet end of the honeycomb body 4. Since these end ranges are likely to be damaged during purification of the exhaust gas, formation of the holes 8 may weaken the structure and reduce the service life. The predetermined range including the gas inlet end is preferably set within a range of 10 mm from the gas inlet end. Although the predetermined range including the gas outlet end varies depending on a value of h described later, the predetermined range including the gas outlet end is preferably set within a range of 10 mm from the gas outlet end.

Now, a conventional metal substrate is formed of a flat foil and a corrugated foil that are perforated, as described above, and has an effect of improving the purification performance at the time of a cold start, but has a drawback of causing increase in pressure loss at the same time.

The present inventors have found that simply forming the holes 8 in the flat foil 2 and the corrugated foil 3 cannot prevent increase in pressure loss, and that it is possible to reduce the pressure loss while maintaining the purification performance by limiting the manner of the hole arrangement. More specifically, the inventors have found that even if the aperture ratio is the same, the larger the arrangement intervals of the holes 8 become in the gas flow direction, the more the increase in pressure loss can be suppressed and thereby the purification performance is not impaired. Here, the aperture ratio is a ratio of the sum of areas of hole portions filled in black relative to a total area surrounded by a triangle as shown in Figure 3a. That is, drawing the triangle by connecting the centers of three adjacent holes (circles) with a line, when the area inside the triangle is defined as the total area and areas of the portions filled in black where the triangle overlaps the respective holes are defined as a hole area, a ratio of the hole area relative to the total area is defined as the aperture ratio. In addition, the center of each hole in the present specification means the centroid of this hole. The gas flow direction in the present specification means the axial direction of the honeycomb body.

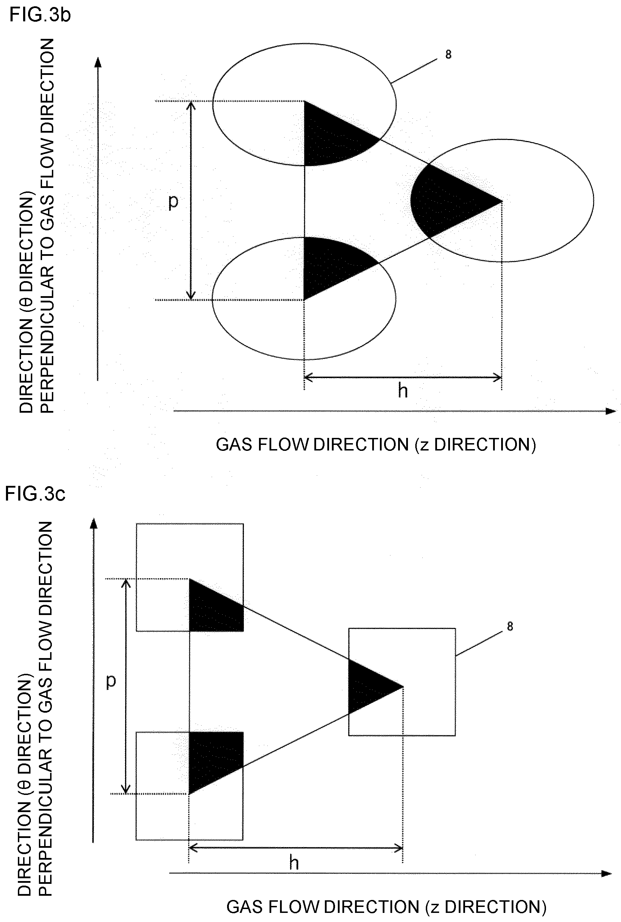

Although the hole 8 is formed in a circular shape in Figure 3a, the present invention is not limited to this shape, and other shapes may also be employed. Other shapes include various shapes such as ellipses, rectangles, and the like. As shown in Figure 3b, also in the case of the hole 8 formed in an elliptical shape, drawing a triangle by connecting the centers (centroids) of the three holes 8 with a line, when the area inside the triangle is defined as the total area and the areas of the portions filled in black where the triangle overlaps the respective holes 8 are defined as the hole area, the ratio of the hole area relative to the total area can be defined as the aperture ratio. As shown in Figure 3c, also in the case of the hole 8 having a rectangular shape, drawing a triangle by connecting the centers (centroids) of three holes 8 with a line, when the area inside the triangle is defined as the total area and the areas of portions filled in black where the triangle overlaps the respective holes 8 are defined as the hole area, the ratio of the hole area relative to the total area can be defined as the aperture ratio. Similarly, the aperture ratio can be defined based on the centroids of the holes 8 also in the case of each hole 8 having a shape other than a circle, an ellipse, and a rectangle.

Generally, in a metal substrate including a flat foil and a corrugated foil that are imperforated, the gas flow through the cells is a laminar flow. However, if there are holes in the foil, the Reynolds number increases partially in the hole portions and turbulent flows are likely to be generated, which results in increase in pressure loss. That is, if the number of holes is larger along the gas flow direction, the number of sites where turbulent flows occur along the gas flow direction becomes larger, which causes increase in pressure loss. However, excessive turbulent flows cause increase in pressure loss without improving the purification performance. In particular, the increase in pressure loss is remarkable when the flow rate is high, and it becomes a factor that reduces the output of an internal combustion engine.

Here, in the honeycomb body included in the metal substrate, the gas flow direction is defined as the z direction, and a direction perpendicular to the z direction along the plane of the metallic flat foil is defined as the θ direction. When the arrangement interval between the holes in the θ direction (in other words, a distance between the hole centers of the adjacent holes 8 in the θ direction) is set to p, and the arrangement interval between the holes in the z direction (in other words, a distance between the hole centers of the adjacent holes 8 in the z direction) is set to h, by setting the value of p to be smaller and setting the value of h to be larger, the interval between the adjacent holes in the gas flow direction becomes larger while the aperture ratio is maintained. As a result, the pressure loss can be reduced without deteriorating the purification performance especially at the time of a cold start, and it is possible to achieve both the high purification performance and the low pressure loss.

Now, the value of h/p is more than 1.0, and preferably an average value thereof is 1.2 or more. By satisfying this numerical condition, both the high purification performance and the low pressure loss can be achieved. The arrangement intervals p in the respective metallic foils of the flat foil 2 and the corrugated foil 3 are also shown in Figure 2. Since the average value is 1.2 or more, values of more than 1.0 and less than 1.2 may also be included.

Here, as shown in Figure 3b, if the shape of each hole 8 is elliptical, the distance between the centroids of adjacent ellipses in the z direction is the arrangement interval h, and the distance between the centroids of adjacent ellipses in the θ direction is the arrangement interval p. As shown in Figure 3c, if the shape of each hole 8 is rectangular, the distance between the centroids of adjacent rectangles in the Z direction is the arrangement interval h, and the distance between the centroids of adjacent ellipses in the θ direction is the arrangement interval p.

In the corrugated foil 3, for the above-mentioned arrangement interval h, the arrangement interval p, the aperture ratio, and the hole size, values being measured in a state of a base material flat foil as a base material of the corrugated foil 3 may be used respectively. The flat foil 2 and the corrugated foil 3 preferably have the same arrangement interval h, the same arrangement interval p, the same aperture ratio, and the same hole size. However, these may be different from each other. In this case, it is sufficient that both the flat foil 2 and the corrugated foil 3 satisfy "h/p > 1.0".

The lower limit of the above aperture ratio is preferably 20%. When the aperture ratio becomes less than 20%, the heat capacity of the honeycomb body 4 becomes excessively large, and the purification performance at the time of a cold start cannot be fully exerted. The upper limit of the aperture ratio is preferably 40%. When the aperture ratio is more than 40%, the adjacent holes 8 might be connected to one another.

The hole size (diameter) of each hole 8 is preferably 6.0 mm or less, more preferably 4.0 mm or less. When the hole size is more than 6.0 mm, the effect of reducing the pressure loss obtained by increase in h/p might be reduced, and the purification performance might be deteriorated. Moreover, the hole size of each hole 8 is preferably 0.2 mm or more. When the hole size becomes smaller than 0.2 mm, the holes 8 are blocked by the catalyst and no turbulent flows can be generated. Here, when each hole 8 has a shape other than a circle, a circle is defined to have the same area as that of the hole 8, and the diameter of this circle may be used as the "hole size".

Embodiment examples

Next, the present invention will be specifically described with reference to embodiment examples. The purification performance and the pressure loss were evaluated for a plurality of catalytic converters having different values of h/p, and the like.

The diameter of each of the holes formed in the flat foil and the corrugated foil was set to 1.0 mm. The formation region of the holes was set to a region excluding 5 mm from the gas inlet end of the honeycomb body and about 5 mm from the gas outlet end thereof. The holes were arranged in a staggered grid arrangement where the hole alignments were alternately offset and this arrangement continues toward the z direction. The shape of each hole was a circle (the same applies to other embodiment examples and comparative examples). The foil thickness of the metallic foil was set to 50 $\mu$m. The thickness of the outer mantle was set to 1.5 mm. A flat foil and a corrugated foil were wound in an overlapping state, to thereby obtain a honeycomb body having a diameter of 50 mm, a length of 80 mm, and a cell density of 300 cells per square inch.

The values of h, p, the hole size, and the aperture ratio were the same in both the flat foil and the corrugated foil. In the corrugated foil, these values were measured in a state of a flat foil before being corrugated (base material flat foil). Specifically, images of the flat foil and the base material flat foil were picked up by a camera, and the images were analyzed to measure the values of h, p, the hole size, and the aperture ratio.

A wash coat slurry containing ceria-zirconia-lanthana-alumina as a main component and containing 1.25 g of palladium per 100 g was passed through the honeycomb body, and after the excessive wash coat slurry was removed, the honeycomb body was dried at 180°C for 1 hour, and subsequently was baked at 500°C for 2 hours, to thereby carry the wash-coat layer on the metallic foils in an amount of 200 g/L in dry weight per volume of the honeycomb body. The supported amount of palladium was 2.5 g/L.

The pressure loss was evaluated by passing normal temperature air, which was adjusted to a predetermined flow rate, through the catalytic converter and measuring a difference in pressure before and after the catalytic converter. In this embodiment example, the pressure loss was evaluated by passing the air at 20°C at a flow rate of 2.5 Nm$^3$/min. This rate is about 21 m/s on average in terms of a flow velocity.

In the meantime, as for the purification performance, a model gas (mixed gas containing carbon monoxide, propylene, nitric oxide, oxygen, carbon dioxide, water vapor, and nitrogen) heated up to 300°C was supplied at a predetermined flow rate through a catalytic converter at a normal temperature so as to evaluate time required for the concentration of propylene to decrease by 50% as the purification performance at the time of a cold start. The concentrations of the respective gases included in the model gas were set as follows: carbon monoxide of 5000 ppm; propylene of 500 ppm; nitrogen monoxide of 500 ppm; oxygen of 4500 ppm; carbon dioxide of 14%; water vapor of 10%; and the balance was nitrogen. The purification performance was evaluated by supplying the model gas at 300 liters per minute under a standard condition.

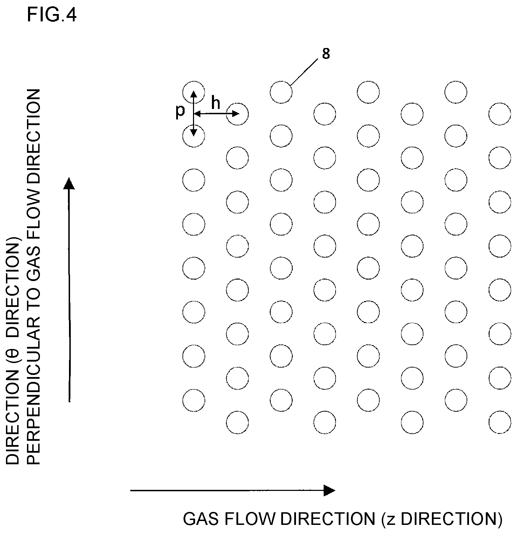

Figure 4 shows the arrangement of a comparative example, where h/p as a length ratio of h and p was set to 1.0 and the aperture ratio was set to 20%.

Figure 3a described above shows an arrangement of the embodiment example, where the value of p was 0.913 times and the value of h was 1.061 times the values shown in Figure 4. The aperture ratio was maintained to be 20%. That is, the value of h/p was increased up to 1.2 while the aperture ratio was maintained to be 20%.

Comparing the case in which h/p is 1.0 shown in Figure 4 to the case in which h/p is 1.2 shown in Figure 3a, the both cases have the same aperture ratio of 20%, the purification performance, i.e., the time required for the concentration of propylene to decrease by 50% was almost the same. However, in the example in Fig. 3a, the interval between the adjacent holes in the z direction is larger than that in Fig. 4. As a result, sites where unnecessary turbulent flows were generated in the gas flow direction (z direction) were decreased; thus, the pressure loss was decreased by about 5%.

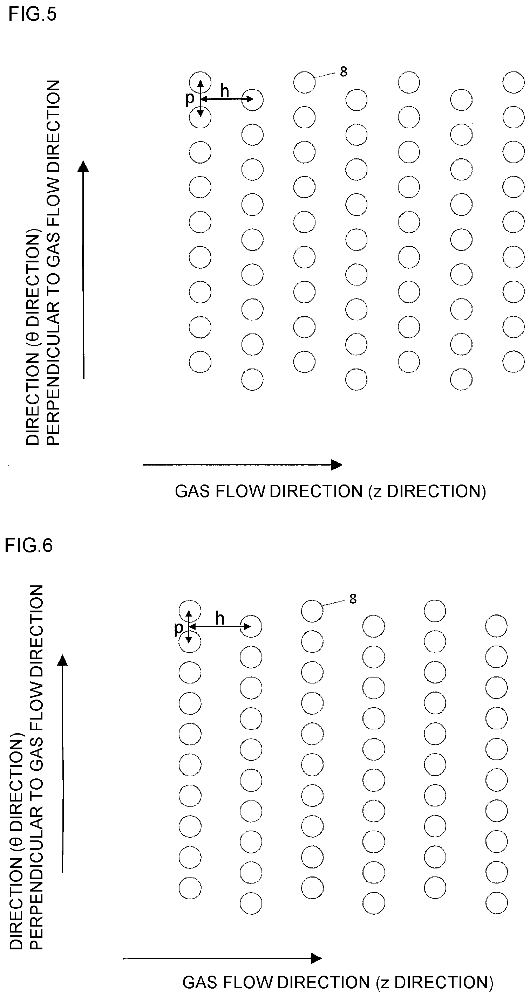

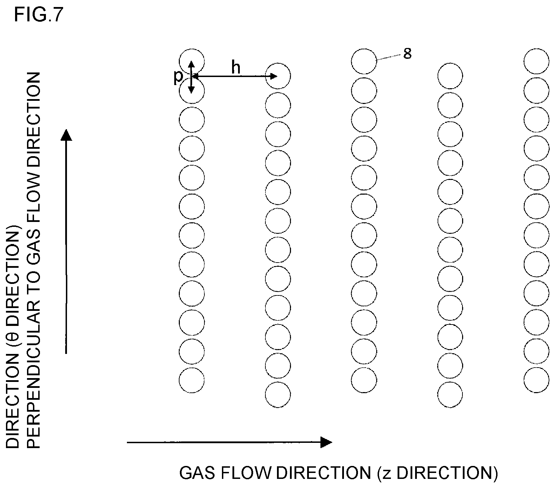

Figures 5, 6, 7 show other embodiment examples of the present invention in which respective values of p were set to be smaller, and respective values of h were set to be larger than those values in Figure 4 so as to set the values of h/p to 1.5, 2.0, and 3.0, respectively. Each aperture ratio was also maintained to 20%. In this case, compared to the case of h/p = 1.0 shown in Figure 4, the purification performances at the time of a cold start were almost the same, but the pressure losses could be reduced by about 9%, about 15%, and about 20%, respectively.

As described above, it has been found that by increasing the value of h/p while maintaining the aperture ratio to the same value, it is possible to reduce the pressure loss without deteriorating the purification performance. That is, it has been found that both the high purification performance at the time of a cold start and the low pressure loss can be achieved.

Of course, when comparing the catalytic converters with the same value of h/p, the catalytic converter with a large aperture ratio has a larger pressure loss than that of the catalytic converter with a small aperture ratio. Therefore, the catalytic converter with a larger aperture ratio that satisfies the relationship between h and p of the present invention might have a larger pressure loss than the catalytic converter with a smaller aperture ratio that does not satisfy the relationship between h and p of the present invention. However, since the carrier with a small aperture ratio has a larger heat capacity, the purification performance at the time of a cold start might be inferior. From the viewpoint of achieving both the high purification performance and the low pressure loss, the catalytic converter satisfying the value of h/p of the present invention is superior in total performance.

Originally, the purification performance of the catalytic converter should be determined based on values such as the amount of substances to be regulated emitted from an engine, the target emission amount from a tail pipe, etc.; and as long as the target emission amount is cleared, there is no need to use the catalytic converter with a large aperture ratio that causes an excessive increase in pressure loss. In this case, by using the catalytic converter with a smaller aperture ratio and satisfying the value of h/p of the present invention, it is possible to achieve a further lower pressure loss, compared to the perforated catalytic converter of the prior art.

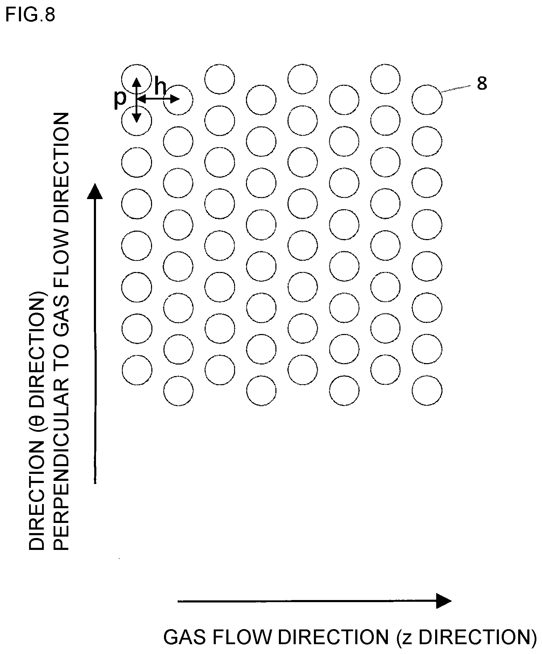

The purification performance and the pressure loss were evaluated by the same experimental method while the aperture ratio was increased from 20% to 40%. The hole size was set to 1.0 mm as in the case of the aperture ratio of 20%, and the configurations of the catalytic converter other than the aperture ratio were set to be the same as those in the case of the aperture ratio of 20%. Figure 8 shows an arrangement of a comparative example, in which h/p as a length ratio of h and p was set to 1.0. In the case of h/p = 1.0, the purification performance at the time of a cold start, that is, the time required for the concentration of propylene to decrease by 50% was reduced from about 17 seconds to 12 seconds, as compared to the case of the aperture ratio 20% shown in Figure 4. However, the pressure loss was increased by about 15% because of increase in the aperture ratio.

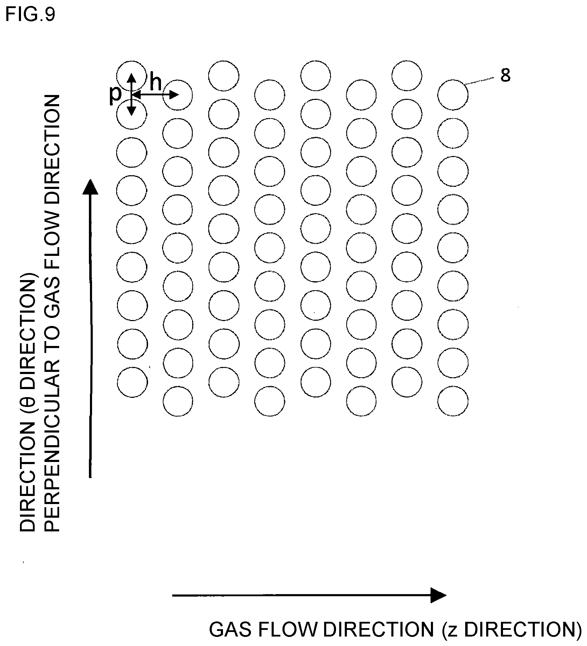

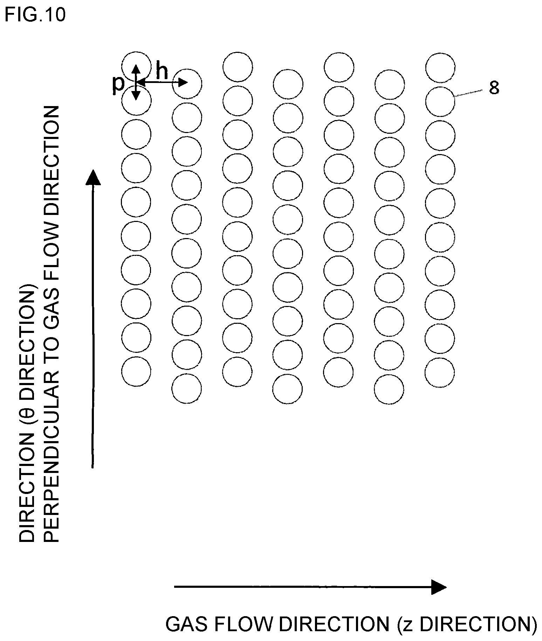

Compared to the arrangement (h/p=1.0) with the aperture ratio of 40% in the prior art as shown in Figure 8, as shown in Figure 9 (embodiment example), when the value of p was multiplied by about 0.91 and the value of h was multiplied by about 1.06 so as to set the value of h/p to 1.2, the pressure loss could be reduced by about 5%. Similarly, as shown in Figure 10 (embodiment example), when the value of p was multiplied by 0.816 and the value of h was multiplied by 1.155 so as to set the value of h/p to 1.5, the pressure loss could be reduced by about 9%.

However, in the case of the aperture ratio of 40%, when the value of h/p is set to about 2.0 or more, the holes adjacent in the θ direction are connected to one another. If the adjacent holes are connected to one another, the aperture ratio becomes decreased; therefore, such an arrangement in which the holes are connected to one another is excluded from the concept of the present invention.

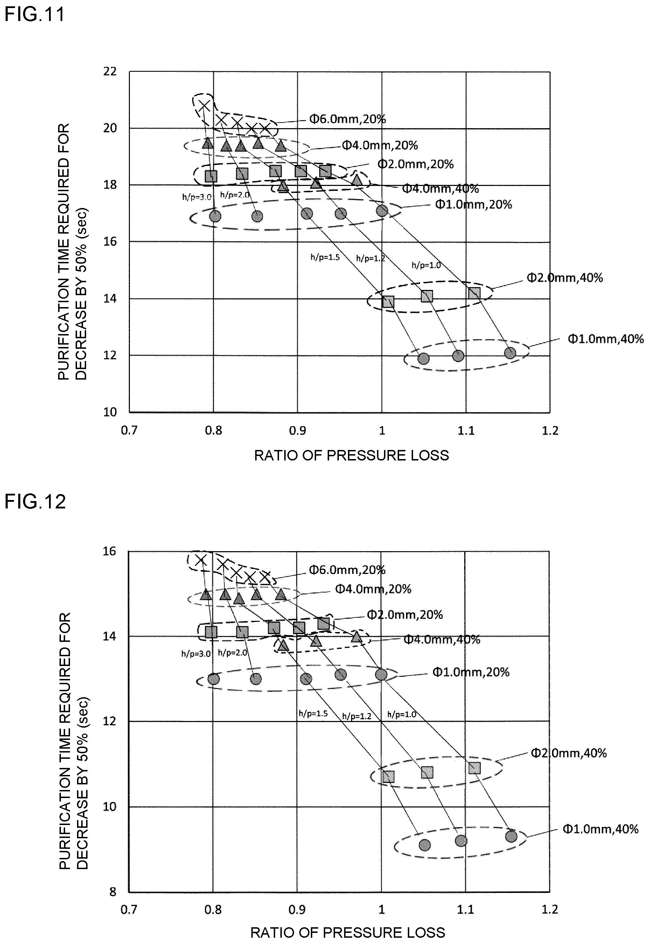

Similarly, the pressure loss and the purification performance were studied respectively for the case with the hole size of 2.0 mm and the aperture ratios of 20% and 40%, for the case with the hole size of 4.0 mm and the aperture ratios of 20% and 40%, and for the case with the hole size of 6.0 mm and the aperture ratio of 20%. The configurations of each catalytic converter other than the aperture ratio were set to be the same. The results are shown in Figure 11. Each of the respective pressure losses is expressed as a ratio relative to the pressure loss having the hole size of 1.0 mm and the aperture ratio of 20% that is defined as 1.

From the graph in the same drawing, it has been found that the catalytic converter with a larger aperture ratio and a smaller hole size has a higher purification performance but a higher pressure loss. The rightmost curve in the drawing is the case of using h/p=1.0 corresponding to the comparative example; and it has been found that the curve shifts to more leftward as the value of h/p becomes larger. That is, in the case in which the aperture ratio and the hole size are the same, it has been found that as the h/p becomes larger, the pressure loss becomes decreased while the purification performance is maintained. Further, the smaller the hole size, the better the purification performance even when the aperture ratio is the same; thus, it is presumed that generation of turbulent flows contribute to improvement in the purification performance.

However, it has been found that when the hole size is 6.0 mm, the effect of reducing the pressure loss by increasing the value of h/p is decreased, and thus the purification performance is slightly deteriorated. Therefore, it has been found that the hole size is preferably 6.0 mm or less.

A study was conducted on the relationship between the pressure loss and the purification performance by changing the foil thickness from 50 μm to 30 μm, changing the cell density from 300 cells to 400 cells per square inch, and changing the hole size and the value of h/p. The configurations of the catalytic converter other than the foil thickness and the cell density were the same. The results are shown in Figure 12. It has been confirmed that although the purification performance is improved as compared to the case of 50 μm/300 cpsi in Figure 11, the relationship between the pressure loss and the purification performance exhibits almost the same tendency.

Compared to the foil with the 50 μm, the foil with 30 μm originally has a smaller heat capacity and is therefore easier to be warmed up; and since it is originally excellent in warm-up performance, the purification performance is improved. However, since the foil is thin, it is naturally inferior to the catalytic converter made of a thicker foil in terms of durability against a high temperature environment, a heat cycle environment, and pulsation of an exhaust gas. In addition, increase in cell density exhibits effect of improving the purification performance under a higher flow rate during rotation of the engine at a high speed, but the pressure loss increases accordingly; therefore, it is desirable to set the foil thickness and the cell density in accordance with the environments where they are used.

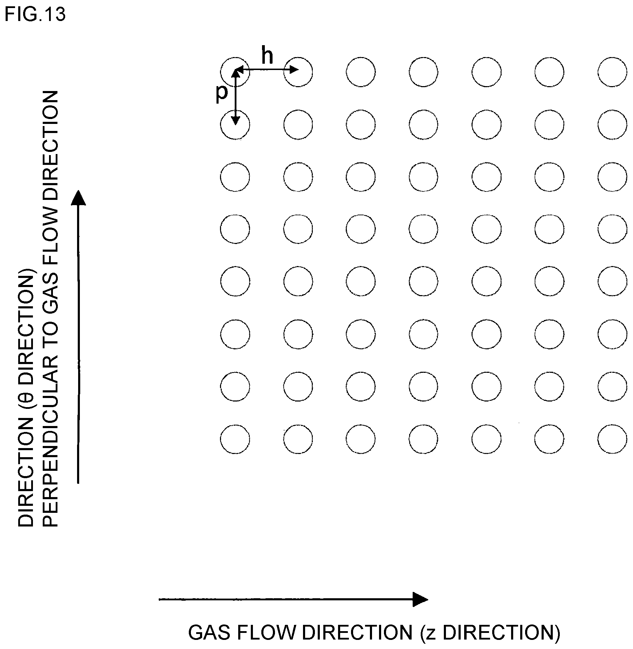

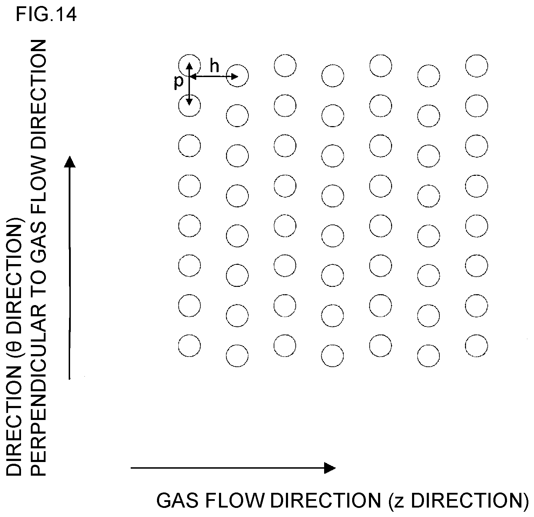

As a modification of the present invention, as shown in Figure 13, when the holes 8 are arranged in a regular grid pattern, it is needless to say that p and h are respective distances between adjacent holes in the θ direction and in the z direction, respectively. The arrangement shown in Figure 14 is an arrangement where hole rows aligned in the θ direction are offset in the θ direction every other row from the positions of the holes shown in Figure 13. Also in this case, p and h are defined as shown in the drawing.

In the above-described embodiments, the honeycomb body is formed from a wound body formed of the flat foils and the corrugated foils that are wound in an overlapping state, but the present invention is not limited to this, and can also be applied to a honeycomb body formed by alternately laminating flat foils and corrugated foils without winding these foils.

As described above, according to the present invention, it is possible to provide the catalytic converter capable of reducing the pressure loss without deteriorating the purification performance at the time of a cold start.

Reference Signs List

1 catalytic converter
2 flat foil
3 corrugated foil
4 honeycomb body
5 outer mantle

**Claims**

1. A catalyst carrying substrate formed by at least partially joining a honeycomb body (4) and an outer mantle (5), the honeycomb body (4) formed by winding or laminating a flat foil (2) and a corrugated foil (3) that are made of metal, the outer mantle (5) surrounding an outer circumference surface of the honeycomb body (4),

the flat foil (2) and the corrugated foil (3) being provided with a plurality of holes (8) penetrating through the flat foil (2) and the corrugated foil (3) in a thickness direction, the holes (8) being spaced apart without being adjacently connected to one another,
**characterized in that** the plurality of holes (8) satisfying the following conditional expression (A):

$$h/p > 1.0 \ldots (A),$$

where h represents an arrangement interval between holes (8) in an axial direction of the honeycomb body (4), and p represents an arrangement interval between adjacent holes (8) in a direction perpendicular to the axial direction and along the foils (2,3),
each hole has a circular shape, and
in the case of the corrugated foil (3), for the arrangement interval h and the arrangement interval p, values measured in a state of a base material flat foil of the corrugated foil (3) are used.

2. The catalyst carrying substrate according to claim 1, wherein an average value of the h/p is 1.2 or more.

3. The catalyst carrying substrate according to claim 1 or 2, wherein a hole size of each hole (8) is 0.2 mm or more and 6.0 mm or less.

4. The catalyst carrying substrate according to claim 1 or 2, wherein a hole size of each hole (8) is 0.2 mm or more and 4.0 mm or less.

5. The catalyst carrying substrate according to any one of claims 1 to 4, wherein an aperture ratio of the holes (8) is 20 % or more.

6. A catalytic converter (1) comprising:

the catalyst carrying substrate according to any one of claims 1 to 5; and
a catalyst coating in the honeycomb body (4).

**Patentansprüche**

1. Katalysatorträgersubstrat, das durch mindestens teilweises Verbinden eines Wabenkörpers (4) und eines Außenmantels (5) gebildet ist, wobei der Wabenkörper (4) durch Wickeln oder Laminieren einer Flachfolie (2) und einer Wellfolie (3) gebildet ist, die aus Metall hergestellt sind, wobei der Außenmantel (5) eine Außenumfangsfläche des Wabenkörpers (4) umgibt,

wobei die Flachfolie (2) und die Wellfolie (3) mit einer Vielzahl von Löchern (8) bereitgestellt sind, die durch die Flachfolie (2) und die Wellfolie (3) in einer Dickenrichtung dringen, wobei die Löcher (8) beabstandet sind, ohne benachbart miteinander verbunden zu sein, **dadurch gekennzeichnet, dass** die Vielzahl von Löchern (8) den folgenden bedingten Ausdruck (A) erfüllt:

$$h/p > 1{,}0 \ldots (A),$$

wobei h ein Anordnungsintervall zwischen Löchern (8) in einer axialen Richtung des Wabenkörpers (4) darstellt und p ein Anordnungsintervall zwischen benachbarten Löchern (8) in einer Richtung senkrecht zu der axialen Richtung und entlang der Folien (2, 3) darstellt,

wobei jedes Loch eine Kreisform aufweist und im Falle der Wellfolie (3), für das Anordnungsintervall h und das Anordnungsintervall p, Werte, die in einem Zustand einer Grundmaterial-Flachfolie der Wellfolie (3) gemessen werden, verwendet werden.

2. Katalysatorträgersubstrat nach Anspruch 1, wobei ein Durchschnittswert des h/p 1,2 oder mehr ist.

3. Katalysatorträgersubstrat nach Anspruch 1 oder 2, wobei eine Lochgröße jeden Loches (8) 0,2 mm oder mehr und 6,0 mm oder weniger beträgt.

4. Katalysatorträgersubstrat nach Anspruch 1 oder 2, wobei eine Lochgröße jeden Loches (8) 0,2 mm oder mehr und 4,0 mm oder weniger beträgt.

5. Katalysatorträgersubstrat nach einem der Ansprüche 1 bis 4, wobei ein Öffnungsanteil der Löcher (8) 20 % oder mehr beträgt.

6. Katalysator (1), umfassend:

das Katalysatorträgersubstrat nach einem der Ansprüche 1 bis 5; und
eine Katalysatorbeschichtung in dem Wabenkörper (4).

## Revendications

1. Substrat support de catalyseur formé par assemblage, au moins en partie, d'un corps alvéolaire (4) et d'une enveloppe externe (5), le corps alvéolaire (4) étant formé par enroulement ou stratification d'une feuille plate (2) et d'une feuille ondulée (3) constituées de métal, l'enveloppe externe (5) entourant une surface circonférentielle externe du corps alvéolaire (4),

la feuille plate (2) et la feuille ondulée (3) étant pourvues d'une pluralité de trous (8) pénétrant la feuille plate (2) et la feuille ondulée (3) dans le sens de l'épaisseur, les trous (8) étant espacés sans être reliés de manière adjacente les uns aux autres ;
**caractérisé en ce que** la pluralité de trous (8) satisfait l'expression conditionnelle suivante (A) :

$$h/p > 1{,}0 \ldots (A),$$

dans laquelle h représente un intervalle d'agencement entre les trous (8) dans la direction axiale du corps alvéolaire (4), et p représente un intervalle d'agencement entre des trous adjacents (8) dans une direction perpendiculaire à la direction axiale et le long des feuilles (2, 3), chaque trou est de forme circulaire, et dans le cas de la feuille ondulée (3), pour l'intervalle d'agencement h et l'intervalle d'agencement p, les valeurs utilisées ont été mesurées à l'état plat du matériau de base de la feuille ondulée (3).

2. Substrat support de catalyseur selon la revendication 1, dans lequel la valeur moyenne de h/p est de 1,2 ou plus.

3. Substrat support de catalyseur selon la revendication 1 ou 2, dans lequel la taille de chaque trou (8) est de 0,2 mm ou plus ou 6,0 mm ou moins

4. Substrat support de catalyseur selon la revendication 1 ou 2, dans lequel la taille de chaque trou (8) est de 0,2 mm ou plus et 4,0 mm ou moins.

5. Substrat support de catalyseur selon l'une quelconque des revendications 1 à 4, dans lequel le rapport d'ouverture des trous (8) est de 20 % ou plus.

6. Convertisseur catalytique (1) comprenant :

le substrat support de catalyseur selon l'une quelconque des revendications 1 à 5, et
un revêtement catalytique dans le corps alvéolaire (4).

FIG.1

FIG.2

FIG.3a

DIRECTION (θ DIRECTION) PERPENDICULAR TO GAS FLOW DIRECTION

IMAGINARY LINE

HOLE AREA

TOTAL AREA

GAS FLOW DIRECTION (z DIRECTION)

FIG.3b

DIRECTION (θ DIRECTION) PERPENDICULAR TO GAS FLOW DIRECTION

GAS FLOW DIRECTION (z DIRECTION)

FIG.3c

DIRECTION (θ DIRECTION) PERPENDICULAR TO GAS FLOW DIRECTION

GAS FLOW DIRECTION (z DIRECTION)

FIG.4

DIRECTION (θ DIRECTION)
PERPENDICULAR TO GAS FLOW DIRECTION

GAS FLOW DIRECTION (z DIRECTION)

FIG.5

DIRECTION (θ DIRECTION)
PERPENDICULAR TO GAS FLOW DIRECTION

GAS FLOW DIRECTION (z DIRECTION)

FIG.6

DIRECTION (θ DIRECTION)
PERPENDICULAR TO GAS FLOW DIRECTION

GAS FLOW DIRECTION (z DIRECTION)

FIG.7

GAS FLOW DIRECTION (z DIRECTION)

DIRECTION (θ DIRECTION)
PERPENDICULAR TO GAS FLOW DIRECTION

FIG.8

DIRECTION (θ DIRECTION)
PERPENDICULAR TO GAS FLOW DIRECTION

GAS FLOW DIRECTION (z DIRECTION)

FIG.9

FIG.10

DIRECTION (θ DIRECTION)
PERPENDICULAR TO GAS FLOW DIRECTION

GAS FLOW DIRECTION (z DIRECTION)

FIG.11

FIG.12

FIG.13

DIRECTION (θ DIRECTION)
PERPENDICULAR TO GAS FLOW DIRECTION

GAS FLOW DIRECTION (z DIRECTION)

FIG.14

DIRECTION (θ DIRECTION)
PERPENDICULAR TO GAS FLOW DIRECTION

GAS FLOW DIRECTION (z DIRECTION)

**EP 4 166 231 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4226884 B
- JP 5199291 B
- JP 4975969 B
- JP 3932798 B
- JP 5279284 B
- JP 6505336 B